# EUROPÄISCHE PATENTSCHRIFT

(11) **EP 0 827 762 B1**
(45) Veröffentlichungstag und Bekanntmachung des Hinweises auf die Patenterteilung: **17.10.2001**
(21) Anmeldenummer: 97113103.2
(22) Anmeldetag: 30.07.1997
(51) Int. Cl.: A63C 17/06

(54) **Rolle für Rollschuhe vom Inline-Skate-Typ**
Wheels for in-line rollerskates
Rouleaux pour patins à roulettes en ligne

(30) Priorität: 05.09.1996 DE 29615350 U; 05.09.1996 DE 29615351 U
(43) Veröffentlichungstag der Anmeldung: 11.03.1998
(73) Patentinhaber: Pawlowski, Christoph, 27751 Delmenhorst (DE); Langer, Günter, 27753 Delmenhorst (DE); Meyer, Wilhelm, 26919 Brake (DE)
(72) Erfinder: Pawlowski, Christoph, 27751 Delmenhorst (DE); Langer, Günter, 27753 Delmenhorst (DE); Meyer, Wilhelm, 26919 Brake (DE)
(74) Vertreter: Eisenführ, Speiser & Partner

(56) Entgegenhaltungen:
- WO-A-94/26366
- US-A- 3 823 952
- US-A- 4 898 403

## Beschreibung

Die Erfindung betrifft einen Rollschuh vom Inline-Skate-Typ sowie eine Rolle hierfür, wobei die Rolle wenigstens ein Lager, insbesondere ein Kugellager aufweist, welches in einer Felge angeordnet ist.

Bei einer bekannten Ausführungsform einer derartige Inline-Skate-Rolle enthält die Rolle eine Felge aus Kunststoff oder Metall, insbesondere Aluminium, eine auf der Felge angeordnete Lauffläche aus Kunststoff und jeweils an den Außenseiten der Rolle in die Felgen eingepaßte Kugellager mit einer Lagerdichtung z.B. einer Dichtungsscheibe. Die Anordnung der Kugellager an den Außenseiten der Felgen bietet der Einwirkung von Umwelteinflüssen eine große Angriffsfläche. Gerade durch den typischen Einsatz der Rolle im Freien können Schmutz und Feuchtigkeitin die Lager eindringen und erhöhte Reibungskräfte und einen größeren Verschleiß verursachen. Bisher bekannte Dichtungsmittel wie Lager- bzw. Dichtungsscheiben können eine Verunreinigung der Lager nur unbefriedigend verhindern. Ein solcher Rollschuh vom Inline-Skate-Typ bzw. eine solche Rolle für einen Rollschuh vom Inline-Skate-Typ ist bekannt aus US-A 3,823,952.

Aufgabe der vorliegenden Erfindung ist es, die Rolle der eingangs genannten Art derart weiterzubilden, daß das Kugellager der Rolle vor Witterung, Schmutz, Feuchtigkeit und mechanischen Einflüssen wirksam und besser als bisher geschützt ist.

Die Aufgabe wird erfindungsgemäß mit einer Rolle mit den Merkmalen nach Anspruch 1 gelöst.

Die Vorteile der Erfindung liegen insbesondere darin, daß durch die Nutzung von Dichtungsmitteln das Kugellager während der gesamten Betriebszeit wirksam geschützt ist, so daß das Eindringen von Schmutz und das Austreten von Schmierstoffen verhindert wird. Damit wird gewährleistet, daß das Kugellager störungsfrei arbeitet und eine hohe Gebrauchsdauer erreicht. Die Anordnung der Dichtungsmittel und damit auch die des Kugellagers innerhalb der Außenkontur der Rolle, gibt diesen Bauteilen eine bevorzugt sichere Position und schirmt sie vor direkt auf sie einwirkende mechanische Belastungen, wie Stößen und Schlägen, ab, mit denen auch im normalen Einsatz zu rechnen ist.

Erfindungsgemäß berührt bei der erfinderischen Rolle das Dichtungsmittel weder die Felge noch den Außenring des Lagers, damit durch die Dichtung des Kugellagers keine zusätzlichen Reibungskräfte auftreten, die die Gebrauchsfähigkeit der Rolle mindern könnte. Erfindundungsgemäß werden also Dichtungen eingesetzt, die berührungsfrei arbeiten.

Bei einer bevorzugten Ausführungsform der Rolle sind zwei als Kugellager ausgebildete Lager vorgesehen. Dies gewährleistet eine hohe axiale Belastbarkeit der Rolle.

Bei einer alternativen Ausführungsform der Rolle ist ein einziges Lager etwa mittig in der Felge angeordnet. Dies stellt einen optimalen Schutz gegen direkte Schläge und Stöße auf das Lager dar und bietet ausreichend Platz für Dichtungsmittel.

Bei einer zweckmäßigen Weiterbildung der Rolle ist das Dichtungsmittel eine Labyrinthdichtung, die berührungs- und verschleißfrei arbeitet und eine sehr gute Dichtwirkung hat. Durch die Verschleißfreiheit dieses Dichtungstyps wird eine lange Nutzungsdauer realisiert.

Besonders bevorzugt werden eine oder mehrere erfindungsgemäße Rollen an einen Rollschuh vom Inline-Skate-Typ montiert. Dabei werden in der Regel vier Rollen hintereinanderliegend mittels Achsbolzen an Halteorganen befestigt, die an der Unterseite eines Schuhs angeordnet sind. Dadurch werden die mechanisch beweglichen Teile des Rollschuhs vor Umwelteinflüssen und den daraus resultierenden Reibungskräften und Verschleiß geschützt. Dies gewährleistet eine störungsfreie Funktion des ganzen Rollschuhs über eine lange Nutzungsdauer.

Vorteilhafte Weiterbildungen der Erfindung sind durch die Merkmale der Unteransprüche gekennzeichnet. Im folgenden wird die Erfindung anhand der Zeichnungen näher erläutert. Es zeigen:
- Fig. 1: eine Rolle mit zwei innenliegenden Kugellagern im Schnitt durch die Drehachse; und
- Fig. 2: eine Rolle mit einem mittig angeordnetem Kugellager im Schnitt durch die Drehachse.

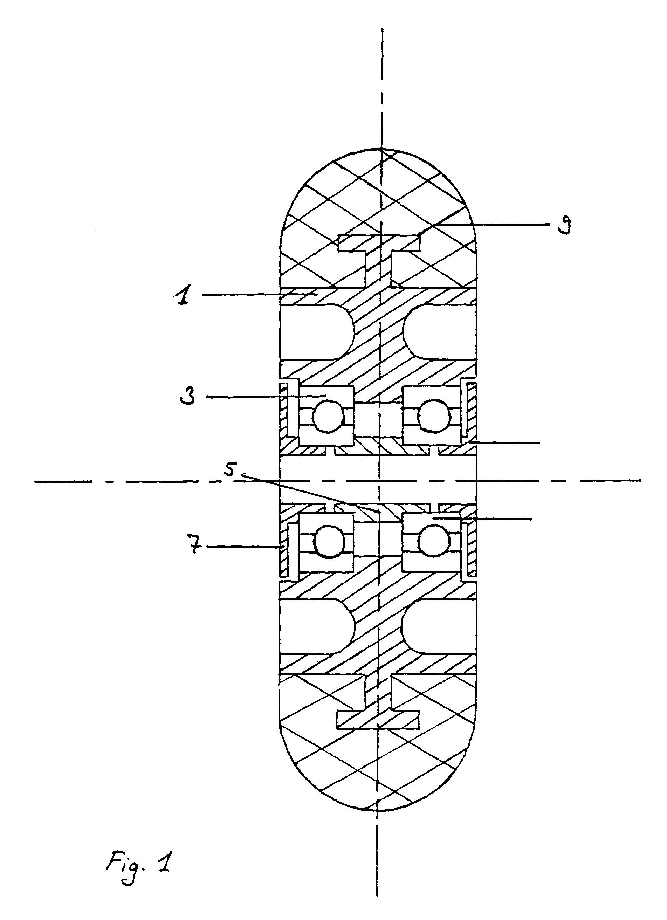

In Fig. 1 ist eine Rolle mit zwei innenliegenden Kugellagern 3 dargestellt. Die Rolle enthält eine Felge 1, die an ihrer nach außen gerichteten Oberfläche eine Erhöhung aufweist, die als Halteorgan für die auf der Felge aufgebrachten Lauffläche (Reifen) 9 dient und verhindert, daß die Lauffläche bei hoher seitlicher Belastung von der Felge springt.

Die beiden Kugellager 3 sind innerhalb der Felge angeordnet und werden durch die in den Innenringen der Kugellager 3 sitzende Lagerbuchse 5 gehalten. Die Dichtscheiben 7 sind als Lagerbuchse gestaltet und sind an den Außenseiten der Rollen angeordnet. Die Dichtscheiben 7 sitzen in den Innenringen der Kugellager 3 und bedecken die Kugellager 3, ohne die Außenringe der Kugellager 3 oder die Felge 1 zu berühren.

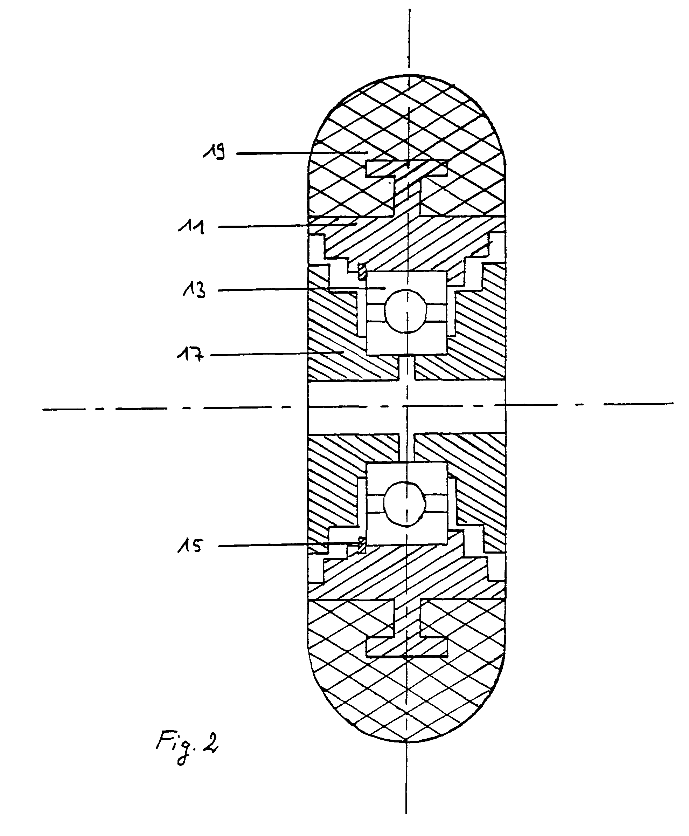

In Fig. 2 ist die Verbindung zwischen der Felge 11 und der auf der Felge montierten Lauffläche 19 wie für Fig. 1 beschrieben gestaltet. Die innere Form der Felge 11 aus Fig. 2 unterscheidet sich jedoch von der aus Fig. 1. Die Felge 11 ist derart gestaltet, daß sie ein Kugellager 13 etwa mittig aufnehmen kann, welches auf der einen Seite durch einen Anschlag und auf der anderen Seite durch einen eingelassenen Sicherungsring 15 gehalten wird.

Die Labyrinthdichtscheiben 17, die als Lagerbuchsen gearbeitet sind und an den Außenseiten der Rolle in dem Innenring des Kugellagers sitzen, finden ihre Entsprechung in der Form der Felge, der sie bis auf einen kleinen Abstand angenähert sind, aber weder diese, noch den Außenring des Kugellagers 13 berühren.

## Patentansprüche

1. Rolle für Rollschuhe vom Inline-Skate-Typ, wobei die Rolle wenigstens ein Lager (3), insbesondere ein Kugellager aufweist, welches in der Felge angeordnet ist, und das Lager (3) durch Dichtungsmittel (7) geschützt ist,
**dadurch gekennzeichnet, daß** ein Dichtungsmittel durch eine Dichtscheibe (7) gebildet ist, die das Lager (3) überdeckt, ohne den Außenring des Lagers oder die Felge (1) zu berühren und daß der Außendurchmesser der Dichtscheibe größer ist als der Außendurchmesser des Lagers (3).

2. Rolle nach Anspruch 1,
**dadurch gekennzeichnet, daß** das Dichtungsmittel (7, 17) vom Lager (3, 13) lösbar ist.

3. Rolle nach Anspruch 1 oder 2,
**dadurch gekennzeichnet, daß** zwei als Kugellager (3, 13) ausgebildete Lager vorgesehen sind.

4. Rolle nach Anspruch 1,
**dadurch gekennzeichnet, daß** ein Lager (13) etwa mittig in der Felge (1, 11) angeordnet ist.

5. Rolle nach einem der vorstehenden Ansprüche,
**dadurch gekennzeichnet, daß** das Dichtungsmittel eine Labyrinthdichtung (17) ist.

6. Rollschuh vom Inline-Skate-Typ mit einem oder mehreren Rollen nach einem der vorhergehenden Ansprüche.

## Claims

1. A roller for roller skates of the inline skate type, the roller having at least one bearing (3), in particular a ball bearing, which is arranged successively , and the bearing (3) being protected by sealing means (7),
**characterised in that** a sealing means is formed by a sealing plate (7) which covers the bearing (3) without touching the outer ring of the bearing or the rim (1), and **in that** the external diameter of the sealing plate is larger than the external diameter of the bearing (3).

2. A roller according to Claim 1,
**characterised in that** the sealing means (7, 17) is detachable from the bearing (3, 13).

3. A roller according to Claim 1 or 2,
**characterised in that** two bearings constructed as ball bearings (3, 13) are provided.

4. A roller according to Claim 1,
**characterised in that** a bearing (13) is arranged approximately centrally in the rim (1, 11).

5. A roller according to one of the preceding claims,
**characterised in that** the sealing means is a labyrinth-type seal (17).

6. A roller skate of the inline skate type, having one or more rollers according to one of the preceding claims.

## Revendications

1. Roulette pour patins à roulettes du type en ligne, les roulettes étant munies d'au moins un palier (3), en particulier un roulement à billes, qui est logé dans la jante, et le palier (3) est protégé par un moyen d'étanchéité (7), **caractérisée en ce qu'**un moyen d'étanchéité est formé par un disque d'étanchéité (7) qui recouvre le palier (3), sans toucher la bague extérieure du palier ou la jante (1), et **en ce que** le diamètre extérieur du disque d'étanchéité est supérieur au diamètre extérieur du palier (3).

2. Roulette selon la revendication 1, **caractérisée en ce que** le moyen d'étanchéité (7, 17) est monté de manière amovible contre le palier (3, 13).

3. Roulette selon la revendication 1 ou 2, **caractérisée en ce qu'**il est prévu deux paliers conçus sous forme de roulements à billes (3, 13).

4. Roulette selon la revendication 1, **caractérisée en ce qu'**un palier (13) est disposé pratiquement au milieu de la jante (1, 11).

5. Roulette selon l'une quelconque des revendications précédentes, **caractérisée en ce que** le moyen d'étanchéité est une garniture d'étanchéité à labyrinthe (17).

6. Patin à roulettes en ligne comprenant une ou plusieurs roulettes selon l'une quelconque des revendications précédentes.
